# EUROPEAN PATENT SPECIFICATION

(11) **EP 4 103 849 B1**
(45) Date of publication and mention of the grant of the patent: **09.12.2026**
(21) Application number: 21710370.4
(22) Date of filing: 12.02.2021
(51) Int. Cl.: F04F 13/00

(54) **PRESSURE EXCHANGER WITH FLOW DIVIDER IN ROTOR DUCT**
DRUCKTAUSCHER MIT STRÖMUNGSTEILER IM ROTORKANAL
ÉCHANGEUR DE PRESSION AVEC DIVISEUR D'ÉCOULEMENT DANS UN CONDUIT DE ROTOR

(30) Priority: 12.02.2020 US 202062975585 P; 08.02.2021 US 202117170087
(43) Date of publication of application: 21.12.2022
(73) Proprietor: Isobaric Strategies, Inc., Riverside CA 92507 (US)
(72) Inventor: HAUGE, Leif J., Riverside, California 92507 (US)
(74) Representative: Fish & Richardson P.C.
(86) International application number: PCT/US2021/018010
(87) International publication number: WO 2021/163605

(56) References cited:
- GB-A- 840 408
- SU-A1- 1 642 096
- US-A- 2 675 173
- US-A- 3 234 736
- US-A1- 2009 104 046
- US-A1- 2013 037 008
- US-A1- 2013 121 850

## Description

### CROSS-REFERENCE TO RELATED APPLICATIONS

This application claims priority to U.S. Provisional Patent Application No. 62/975,585, filed on February 12, 2020, and U.S. Non-Provisional Application No. 17/170,087, filed on February 8, 2021.

### TECHNICAL FIELD

The present disclosure relates to a pressure exchanger, and more specifically, a pressure exchanger including one or more flow dividers in rotor ducts to reduce a dead volume in the rotor and increase flow capacity of the pressure exchanger.

### BACKGROUND

A pressure exchanger is a device that can exchange pressure energy between a high-pressure fluid stream and a low-pressure fluid stream. For instance, the pressure exchanger can exchange pressure energy between the high pressure fluid stream and the low pressure fluid stream while separating the two fluid streams by a liquid barrier or interface formed in a rotor of the pressure exchanger. The liquid barrier or interface may be defined by a fluid volume remaining in the duct of the rotor (i.e., dead volume) of one or both of the streams. The pressure exchanger may use the remaining dead volume in the rotor as the separating interface or barrier to avoid excessive mixing of the two fluid streams in the rotor. However, in some cases, the dead volume may result in partial displacement of the fluid streams with respect to an entire duct volume, and decrease a flow capacity, i.e., a net output of the pressure exchanger. For instance, a pressure exchanger having a 40% dead volume in the rotor may be able to use only 60% of the duct volume as a displacement volume for transmitting the streams.

In some cases, a pressure exchanger includes a rotor having co-axial ducts in which each stream is displaced by direct contact. In order to prevent excessive mixing of the streams inside the duct, a significant portion of the duct volume may be left as a separation barrier or dead volume. In some cases, this barrier fluid volume may occupy up to 50% of the duct volume, and the dead volume hence causes a substantial reduction of flow capacity per each rotor duct revolution and increases kinetic loss associated with the dead volume of liquid streams.

The dead volume of the rotor generally relates to an aspect ratio ("AR") of the rotor duct, for example, defined by a ratio of a diameter of the rotor duct with respect to a length of the rotor between end surfaces of the rotor. The aspect ratio of the rotor duct also relates to mixing of fluid streams in the rotor. For example, the dead volume and mixing in the rotor duct can be reduced by decreasing the aspect ratio of the rotor duct. Thus, in some cases, for decreasing the capacity loss due to the dead volume, a greater number of rotor ducts with a reduced aspect ratio may be defined in the rotor. However, this approach may result in a limited improvement due to a substantial loss of flow cross-sectional areas. In some cases, the aspect ratio can be reduced by increasing the rotor length, but this approach may not be feasible in general due to manufacturing and bearing performance issues.
SU 1 642 096 A1 shows a rotor of a wave pressure exchanger. The rotor of the wave pressure exchanger contains peripheral and inner cylinders, longitudinal baffles dividing the annular gap between the cylinders into pressure-exchange cells. The number of partitions is even, in the middle part of every second a recess is made with the formation of oblique internal cuts along the entire length of the partition, located at an acute angle to the inner cylinder. Elimination of the middle part of every second partition allows to combine two adjacent cells into one in the main section cells.
GB 840 408 A relates to pressure exchangers. A pressure exchanger cell ring comprises a plurality of individual tubular members between inner and outer co-axial cylindrical members, and lying parallel to the axis of the cylindrical members. The tubular members are cylindrical. The document describes a number of embodiments in which the tubular members are of various cross-sectional configurations, and various arrangements of cylindrical tubular members which may be of different cross-sectional areas. The spacers (where they exist) may or may not form cell passages. The cells may be rotary or stationary.
US 2013/121850 A1 shows a rotary energy recovery device wherein a multi-channel cylindrical rotor revolves with its end faces juxtaposed in sealing relationship with end surfaces of a pair of flanking end covers, and wherein inlet and outlet fluid passageways are provided in each end cover. Fluid may be directed into the rotor channels and allowed to exit therefrom in an axial direction parallel to the axis of the rotor; however, rotor revolution is self-driven as a result of the interior design of the channels which extend axially through the rotor and are shaped so that fluid flow therethrough creates a torque.
US 2009/104046 A1 shows a rotary pressure exchange device for transferring the pressure of a high pressure stream of first fluid to a low pressure stream of second fluid having an improved substantially cylindrical rotor. The rotor is formed to provide a plurality of longitudinal passageways comprising the lumens of parallel tubes of circular cross-section which are located uniformly throughout an annular region. Certain preferred embodiments include an outer tubular casing of circular cross-section and a coaxial central hub.
US 2013/037008 A1 describes a pressure wave supercharger that includes a housing having an accommodating room to accommodate a rotor rotatably about an axis, and an exhaust side wall face which is arranged at the accommodating room as being opposed to one end face of the rotor and to which an exhaust gas introduction port and an exhaust gas discharge port are opened, and the rotor includes a shaft portion supported by the housing rotatably about the axis, plural partition walls arranged as being extended in the radial direction from the shaft portion and in the axial direction from the one end face to other end face of the rotor, and a partition member which is arranged at a space between adjacent partition walls and which partitions the space into an inner cell and an outer cell as extending from the one end face to the other end face of the rotor, and an exhaust side groove portion concaved in a direction being apart from the rotor is formed at the exhaust side wall face as being overlapped with a trajectory of the partition member lined during rotation of the rotor as viewed from the axial direction. US 2013/037008 A1 does not disclose flow dividers partitioning an inner space of rotor ducts into a plurality of equal resistance flow paths without any structural support function.

In some cases, the rotor may be machined from a single ceramic blank and positioned between end covers that introduce the fluid streams into the rotor ducts. The pressure exchanger may further include tubular elements to improve serviceability, flow pressure ripples, manufacturability, and flow capacity with reduced mixing. For example, the pressure exchanger may include a bundle of tubes disposed between an outer and inner casings. The tubes may be made of metal or composite materials and welded or glued together. The tubes may have a length equal to a length of the rotor and face a sealing element in each end against the end covers. For example, a ceramic sealing element may be used for the rotor made of ceramic. In some cases, where one component is made of metal while the other component made of ceramic, there may be issues with seizure or galling that prevent reliable operation, as well as the unpredictable onset of corrosion.

In some cases, the tubes may be made of alternative materials such as composite materials. The composite materials, however, may wear rapidly by particles in the end clearance with the end covers. In some cases, an epoxy adhesive may be used to attach the tubes made of ceramic to the rotor, but the adhesive may be prone to wear at each end and lead to seal destruction from cavitation. In some cases, the pressure exchanger may include rotor end plates that are glued to the tubes, but the rotor end plates may reduce an available flow cross-sectional area and be very costly to manufacture.

In some cases, a rotor may include a shell or body in the form of an outer tubular casing, and a plurality of walls that radially extend and divide an annular region into a plurality of pie-shaped ducts. For instance, each of the compartments or ducts may include an about 30° segment of the circular cross-section of the rotor. The rotor may further include a plurality of individual tubes that have various sizes and that are spatially arranged in each of the pie-shaped compartments in a repetitive pattern about the rotor. The tubes have varying diameters and occupy a high percentage of the pie-shaped region. This arrangement of the tubes may result in unequal flow resistance and uneven fluid displacement for each rotor duct because the flow velocity may be much higher in the larger tubes than in the smaller tubes. That is, the smaller tubes may be under-utilized, and the concept of having tubular elements may be counterproductive with respect to mixing.

In some cases, pressure exchangers may employ a rotor of solid ceramic or other material, and the rotor may have open ducts of generally circular to pie-shaped cross sections extending longitudinally therethrough. In some examples, the rotational speed of the rotor and the flow of the fluid streams may determine the relative size of the separating dead volume. In some cases, the rotor having a plurality of parallel tubes may suffer from wear, corrosion, and undesired consequences limiting commercial applicability.

### SUMMARY

The present disclosure describes a pressure exchanger including one or more flow dividers that are located inside a rotor duct and that can reduce a dead volume and fluid mixing in the rotor duct. A pressure exchanger according to the present invention is defined by claim 1. Further advantageous developments of the present invention are set out in the dependent claims.

The present disclosure also describes a method for improving the performance of a rotary pressure exchanger to transmit pressure from one fluid stream to another fluid stream.

The present disclosure further describes a pressure exchanger that can improve commercial performance by adding an internal flow divider structure to the rotor ducts. The flow divider can substantially reduce the aspect ratio of the rotor duct without incorporating any element of sealing or structural support function. For example, the internal rotor duct flow divider can split the rotor duct into multiple equal resistance flow elements (e.g., paths or spaces). The flow elements, which have a smaller aspect ratio compared to the original duct without the flow divider, can reduce mixing in the rotor and increase the flow capacity of the pressure exchanger.

In some examples, the flow divider can be press-fitted into the rotor duct. Alternatively or in addition, the flow divider can be glued to the rotor duct. In some examples, the flow divider can have a thin plate structure that may not provide structural support to the rotor. In some examples, the flow divider can be made of various materials that may be different from a material of the rotor. For instance, the flow divider can be made of plastics and provide minimum flow resistance by having thin walls. In some cases, a length of the flow divider can be shorter than a length of the rotor duct to avoid or reduce a mechanical drag and interference between the flow divider and an end cover of the pressure exchanger.

### BRIEF DESCRIPTION OF THE DRAWINGS

FIG. 1 is a circular cross-sectional view showing an example of a pressure exchanger in related art.
FIG. 2 is a perspective view showing an example of a pressure exchanger according to the present disclosure.
FIG. 3 is a perspective view showing an example of a rotor of the pressure exchanger and examples of flow dividers according to the present disclosure.
FIGS. 4A to 4C are views showing examples of flow divider structures.
FIG. 5 is a cross-sectional view showing an example of a rotor duct including split flow dividers that accommodate duct manufacturing offsets.

Like reference symbols in the various drawings indicate like elements.

### DETAILED DESCRIPTION

One or more implementations of the present disclosure will be described below. These described implementations are only exemplary of the present disclosure. As discussed in detail below, the described implementations relate generally to a rotary pressure exchanger including a plurality of rotor ducts defined in a rotor.

The present disclosure describes one or more examples of flow dividers that are located inside the rotor duct to reduce a dead volume in the rotor of the pressure exchanger and to increase flow capacity of the pressure exchanger.

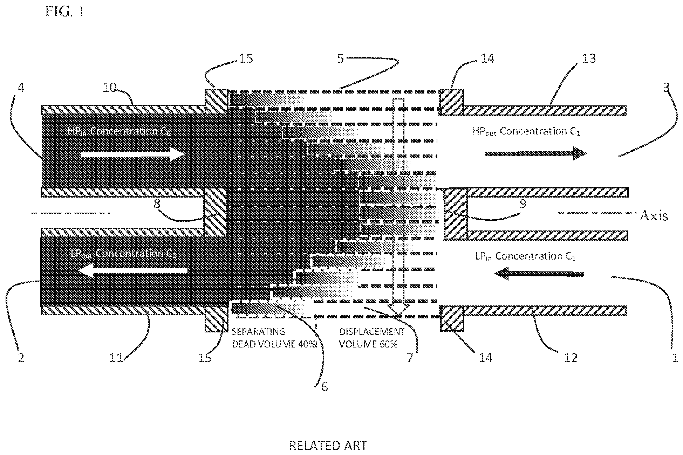

FIG. 1 is a circular cross-sectional view showing an example of operation of a pressure exchanger in related art.

For instance, the pressure exchanger includes a rotor 5 located between a pair of end covers 14 and 15 that face high-pressure streams and low-pressure streams. The end covers 14 and 15 include sealing areas 8 and 9 that are disposed at central areas of the end covers, respectively. The rotor 5 may include multiple rotor ducts that extend through an inside of the rotor 5. The rotor 5 may be located between the high-pressure and low-pressure streams and configured to rotate about an axis passing through the sealing areas 8 and 9.

The end cover 14 may define a plurality of apertures connected to an inlet duct 12 and an outlet duct 13. For example, the end cover 14 includes a first aperture connected to the inlet duct 12 and configured to receive a low pressure seawater feed 1 having C₁ salinity (i.e., concentration of salt), and a second aperture connected to the outlet duct 13 and configured to discharge a high pressure seawater output 3 having C₁ salinity.

The end cover 15 may define a plurality of apertures connected to an inlet duct 10 and an outlet duct 11. For example, the end cover 15 includes a first aperture connected to the inlet duct 10 and configured to receive a high pressure brine feed 4 having C₀ salinity, and a second aperture connected to the outlet duct 11 and configured to discharge a low pressure brine water output 2 having C₀ salinity. The salinity (C₀) of the brine water feed 4 may be greater than the salinity (C₁) of the seawater feed 1.

The seawater feed 1 may, while moving in a direction from the sealing area 9 toward the end cover 15, gradually move a dead volume 6 in the rotor 5 toward the end cover 15. For example, the dead volume 6 may constitute about 40% of an overall duct volume of the rotor 5 and remain in the rotor 5. Based on rotation of the rotor 5, the dead volume 6 may, while moving toward the end cover 15, displace the brine volume 7 in the rotor 5 through the low pressure outlet duct 11. The displacement volume may constitute about 60% of the overall duct volume.

As shown in FIG. 1, the dead volume 6 may separate the different streams and remain in the rotor ducts, while oscillating back and forth along the axis of the rotor 5 for each revolution of the rotor 5. For example, the dead volume may separate the seawater feed 1 and the brine water output 2, and separate the brine water feed 4 and seawater output 3. The dead volume 6 may define a salinity gradient having salinity C₀ at the brine interface of the dead volume and salinity C₁ at the seawater interface of the dead volume. For example, FIG. 1 illustrates a plurality of portions of the dead volume 6 in the rotor ducts in gray scale. The dead volume 6 may secure a low mixing transfer between brine water and seawater.

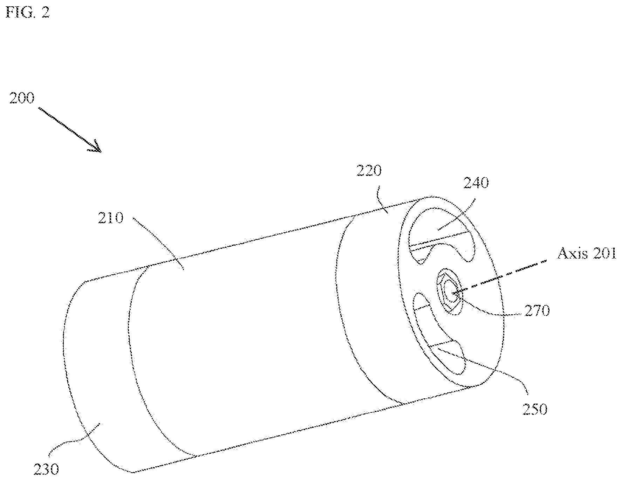

FIG. 2 is a perspective view showing an example of a pressure exchanger according to the present disclosure.

In some implementations, a pressure exchanger 200 can include a rotor 210, a first end cover 220, and a second end cover 230. The first end cover 220 comprises at least one high pressure inlet 240 configured to receive a first stream of high pressure liquid. The first stream can have a first concentration. The first end cover 220 can further include at least one low pressure outlet 250 through which the first stream flows out of the pressure exchanger 200. In some cases, the pressure exchanger 200 can include a rod 270 that holds the rotor 210 and end covers 220 and 230 together. The rod 270 may include or serve as a shaft that defines an axis 201 of rotation of the rotor 210. For instance, the rotor 210 can rotate about the axis 201 in one or both of a clockwise direction and a counterclockwise direction. The rotor 210 and the end covers 220 and 230 can communicate first fluid and second fluid, which is similar to the operation of the rotor 5 and the end covers 14 and 15 described above with FIG. 1.

The rotor 210 can rotate relative to the end covers 220 and 230 by various driving mechanisms. For example, the rotor 210 may mechanically rotate about a shaft (e.g., rod 270) that extends along the axis 201. The shaft may be rotated by a driving device such as a motor. In some implementations, the rotor 210 (or the shaft of the rotor 210) can be configured to rotate by a flow entering to the rotor 210. For instance, the pressure exchanger 200 can further include a ramp structure that includes an inclined surface with respect to the axis 201. The inclined surface of the ramp structure can be configured to face and contact incoming flow streams. Based on pressure of the incoming flow streams applied to the inclined surface of the ramp structure, the rotor 210 can rotate about the shaft relative to the end covers 220 and 230.

In some implementations, a rotation speed of the rotor 210 can be determined based on the arrangement of the incline surface of the ramp structure. For example, the rotation speed of the rotor 210 may be determined based on increasing or decreasing an inclined angle of the incline surface with respect to the axis 201. In some examples, the rotation speed of the rotor 210 may be determined based on increasing or decreasing an area or a number of the incline surfaces arranged in the ramp structure. In some examples, the rotation speed of the rotor 210 may vary based on a pattern of the inclined surface of the ramp structure.

Alternatively or in addition, the rotation speed of the rotor 210 can be controlled by adjusting a flow rate or pressure of the incoming streams. For example, the rotation speed of the rotor 210 can be increased based on an increase of the flow rate of the incoming stream to the end cover 220. The rotation speed of the rotor 210 can be decreased based on a decrease of the flow rate of the incoming stream to the end cover 220. In this example, the rotation speed of the rotor 210 depends on the flow rate of the incoming stream to the end cover 220.

In some implementations, the rotation speed of the rotor 210 can be controlled independent of the flow rate of the incoming stream. For example, the rotor 210 can be rotated by a separate driving device such as a motor. In another example, one or more components of the pressure exchanger 200 may be replaced to adjust the rotation speed of the rotor 210 while keeping the same flow rate of the incoming stream. In particular, the end cover 220, the end cover 230, rotor 210, or the ramp structure having the inclined surface can be replaced to adjust the rotation speed of the rotor 210. In some examples, the end cover 220 and the end cover 230 may include the ramp structure having the inclined surface.

In some implementations, the rotor 210, the end covers 220 and 230, and the rod 270 or another axle may be made of a corrosion resistant material, such as ceramic. For example, the end covers, rotor, and/or axle may be made of Alumina ceramic (aluminum oxide ceramic), including 92% to 99.8% aluminum oxide ceramic, for example. In some cases, the end covers, rotor, and/or axle may be made of Alumina ceramic including 99.8% aluminum oxide ceramic.

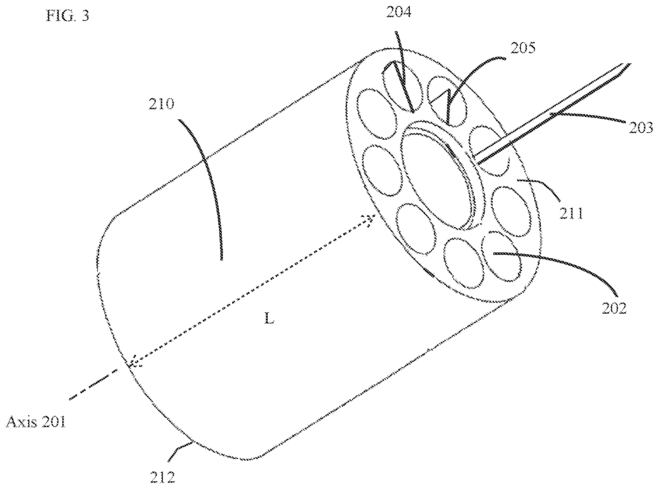

FIG. 3 is a perspective view showing an example of a rotor of the pressure exchanger and examples of flow dividers.

For example, the rotor 210 can includes multiple rotor ducts 202 that extend parallel to the axis 201, where each rotor duct 202 extends between a first side surface 211 and a second side surface 212 of the rotor 210. The first side surface 211 and the second side surface 212 are spaced apart from each other in an axial direction of the axis 201. As explained above, the rotor 210 can be configured to rotate about the axis 201 and communicate a first fluid through the first side surface 211 of the rotor 210 and a second fluid through the second side surface 212 of the rotor 210.

The pressure exchanger 200 can include a plurality of flow dividers having a non-tubular shape. For example, the flow dividers can have a substantially flat shape (e.g., a plate shape). FIG. 3 illustrates three flow dividers or plates 203, 204, and 205, for example, but the pressure exchanger 200 can include more or less flow dividers in other implementations. In some implementations, each of the rotor ducts 202 can include one or more flow dividers therein that extend through each rotor ducts 202.

The flow divider 203 represents a first insertion position in which the flow divider 203 is partially inserted into one of the rotor ducts 202. The flow divider 204 represents a second insertion position in which the flow divider 204 is further pushed into one of the rotor ducts 202 and makes surface alignment or flush with the first side surface 211. In some cases, the second insertion position may be a final position of the flow divider 204. According to the present invention, the second insertion position is not a final position of the flow divider 204.

For example, the flow divider 205 represents a third insertion position according to the present invention in which position the flow divider 205 is further pushed into one of the rotor ducts 202 and its end positioned slightly below or recessed relative to the first side surface 211. That is, the flow divider 205 has a first axial end surface that is spaced apart from and recessed relative to the first side surface 211 in the axial direction. The flow divider 205 further includes a second axial end surface that is spaced apart from and recessed relative to the second side surface 212 of the rotor 210 in the axial direction.

According to the present invention, the third insertion position of the flow divider 205 is the final position of each of the flow dividers to avoid any mechanical contact or interference with the opposing end cover 220 or 230 (see FIG. 2). Thus, the rotor 210 can rotate relative to the end covers 220 and 230 without interference with the flow dividers in their final positions inside the rotor ducts 202. According to the present invention, an axial length of the flow divider 205 is less than a rotor length ("L") of the rotor 210 in the axial direction such that the axial ends of the flow divider 205 are recessed relative to the first side surface 211 and the second side surface 212, respectively.

In some implementations, where the rotor 210 is made of ceramic as described above, the flow dividers can be made of plastic or composite materials. The flow dividers can be held in place by friction force against inner surfaces of the rotor ducts 202, and, in some examples, aided with an adhesive or glue.

The flow dividers partition each rotor duct 202 into multiple equal resistance flow elements or paths without any structural support function. The flow dividers can partition each rotor duct 202 into multiple equal resistance flow elements or paths without any sealing function. The flow dividers 203, 204, and 205 can reduce an aspect ratio of the flow elements to thereby reduce mixing of the fluid streams inside the rotor duct 202 and increase a utilization of the rotor space without increasing a rotation speed of the rotor 210.

For example, the flow divider 205 can define an aspect ratio of two flow paths defined in the rotor duct 202. Specifically, the aspect ratio can be a ratio of a width of one flow path in a radial direction with respect to an axial length of the flow path in the axial direction. The width can be less than or equal to a diameter of one rotor duct 202, and the length can be less than or equal to the rotor length L. In some examples, each of the plurality of flow paths can have an equal width or define an equal cross-sectional area. In addition, each of the plurality of flow paths can have an equal axial length to thereby define an equal aspect ratio for the plurality of flow paths.

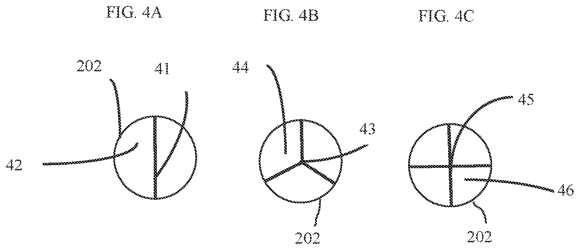

FIGS. 4A to 4C are views showing various examples of flow divider structures disposed in a rotor duct.

FIG. 4A illustrates an example of a flow divider including a single wall or plate 41 that divides the rotor duct 202 into two equal resistance flow paths 42. In this example, each flow path 42 can have an equal cross-section area, for example, a half of a circle area defined by the rotor duct 202. A radial width of each flow path 42 can be between a radius and a diameter of the circle area defined by the rotor duct 202. In some cases, the aspect ratio can be determined based on an effective diameter of a virtual circle that has the same area as the cross-section area of one flow path. For example, referring to FIG. 4A, the effective diameter of the virtual circle can be $1 / \sqrt{2}$ of the diameter of the circle area defined by the rotor duct 202. In some implementations, each of flow path 42 can apply an equal flow resistance to the fluid streams such that the fluid streams flow with an equal flow velocity when an equal pressure difference is applied to axial ends of each flow path 42. This is one of important conditions to maximize flow capacity without increasing mixing between the fluid streams in the rotor duct 202.

FIG. 4B illustrates an example of a flow divider having a hub structure including three plates or walls 43 that define three equal resistance flow paths 44. In some examples, the flow divider structure can be symmetrical with respect to a diameter of the circle area defined by the rotor duct 202. In the example shown in FIG. 4B, the effective diameter of the virtual circle can be 1/√3 of the diameter of the circle area defined by the rotor duct 202 because each of the pie-shaped areas has 1/3 of the circle area defined by the rotor duct 202. The effective diameter of the virtual circle can be used to determine the aspect ratio of the flow paths 44. In some implementations, each of flow path 44 can apply an equal flow resistance to the fluid streams such that the flow streams flow with an equal flow velocity when an equal pressure difference is applied to axial ends of each flow path 44.

In some examples, the flow divider structure may not be symmetrical but rather be adapted to the actual shape of the rotor duct 202. For instance, the rotor duct 202 can have a non-circular shape, and the flow dividers can be arranged to define a plurality of flow paths that have an equal cross-sectional area regardless of the shape or symmetricity of each of the plurality of flow paths. In some implementations, the flow divider structure can include an increased number of flow dividers. For example, one rotor duct 202 can include a flow divider that includes three or more flow divider portions or walls therein (e.g., FIGS. 4B and 4C).

FIG. 4C illustrates an example of a flow divider including four plates or walls 45 that define four equal resistance flow paths 46. In the example shown in FIG. 4C, the effective diameter can be 1/2 of the diameter of the circle area defined by the rotor duct 202 because each of the pie-shaped area has 1/4 of the circle area defined by the rotor duct 202. The effective diameter of the virtual circle can be used to determine the aspect ratio of the flow paths 46. In some implementations, each flow path 46 can apply an equal flow resistance to the fluid streams such that the fluid streams flow with an equal flow velocity when an equal pressure difference is applied to axial ends of each flow path 46.

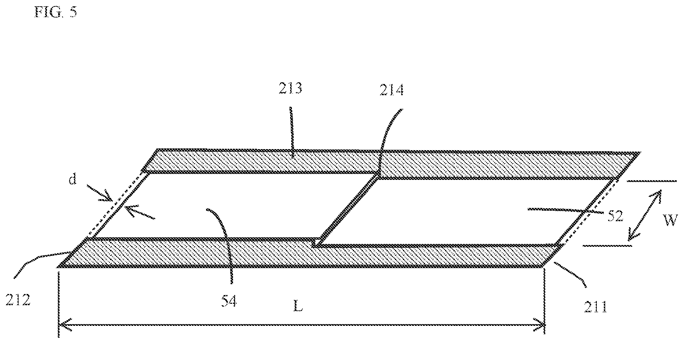

FIG. 5 is a cross-sectional view showing an example of a rotor duct including split flow dividers that accommodate duct manufacturing offsets. For examples, FIG. 5 illustrates a cross-section area of a rotor duct 213 including a step portion 214 that can be generated from machining of the rotor duct 213. For example, the step portion 214 can be generated at a position halfway from both ends of the rotor duct 213.

In some examples, a misalignment of a boring process of the rotor duct 213 may result in the step portion 214. In particular, the boring process can be performed from the first side surface 211 toward the second side surface 212 and then performed from the second side surface 212 toward the first side surface 211. In some cases, the boring process can be simultaneously performed from the first side surface 211 and the second side surface 212 toward the opposing side surfaces. The step portion 214 can be generated if the boring process from the side surfaces are performed along two axes that are slightly offset from each other.

In some examples, the misalignment of the boring process can vary from one rotor duct to another. For example, a location of the step portion 214 relative to the side surface 211 and 212 can vary from one rotor duct to another. In some cases, a step depth of the step portion 214 can vary, as well, from one rotor duct to another.

In some implementations, the flow divider can include two or more separate flow dividers 52 and 54 inserted from each end of the rotor duct 213 to accommodate the misalignment or variation of the boring process. For example, the rotor duct 213 includes the step portion 214, a first rotor portion that extends from the first side surface 211 to the step portion 214, and a second rotor portion that extends from the second side surface 212 to the step portion 214. The first flow divider 52 can be located in and extend along the first rotor portion (e.g., the right part of the step portion 214 in FIG. 5), and the first flow divider 52 has a first inner end that faces the step portion 214. The second flow divider 54 can be located in and extend along the second rotor portion (e.g., the left part of the step portion 214 in FIG. 5), and the second flow divider 54 has a second inner end that faces the first inner end and the step portion 214.

In some implementations, an outer end of at least one of the first flow divider 52 or the second flow divider 54 may be spaced apart from the corresponding side surface 211 or 212. For example, the outer end of each of the first flow divider 52 and the second flow divider 54 can be recessed relative to the corresponding side surfaces 211 and 212 by a distance "d." In some cases, the aspect ratio can be defined as D/k(L-2d), where D denotes an inner diameter of the rotor duct 213, and k denotes an adjustment coefficient according to an effect diameter. The effective diameter can be determined by a number of flow paths defined by the flow divider (e.g., $k = \sqrt{N}$, where N is a number of flow paths in one rotor duct).

Referring to FIG. 5, the aspect ratio can be proportional to a width ("W") of the first flow divider 52 or the second flow divider 54 in the radial direction, and the aspect ratio can be inversely proportional to a sum of axial lengths of the first flow divider and the second flow divider. For example, the sum of axial lengths of the first flow divider 52 and the second flow divider 54 may be less than or equal to the distance L between the first side surface 211 and the second side surface 212. The distance L can be defined as the rotor length L (see FIG. 3).

In some cases, the width W of the first flow divider 52 can be equal to the width of the second flow divider 54, and the axial length of the first flow divider 52 can be equal to the axial length of the second flow divider 54. For example, the axial length of the first flow divider 52 and the second flow divider 54 can be a half of (L-2d).

In some implementations, the width (W1) of the first flow divider 52 can be different from the width (W2) of the second flow divider 54, and the axial length (L1) of the first flow divider 52 can different from the axial length (L2) of the second flow divider 54 to accommodate variation in the boring process of each rotor duct. In some examples, the first flow divider 52 can be recessed by d1 from the side surface 211, and the second flow divider 54 can be recessed by d2 from the side surface 212. That is, the separate flow dividers 52 and 54 can have structure for accommodating manufacturing offsets to thereby provide strong friction force to keep the structure from moving, and wearing of the flow dividers 52 and 54 and the rotor duct 213 can be reduced.

All examples described herein are merely to describe the present disclosure in greater detail. Therefore, it should be understood that the scope of the present disclosure is not limited to the example implementations described above or by the use of such terms unless limited by the appended claims. Also, it should be apparent to those skilled in the art that various alterations, substitutions, and modifications may be made within the scope of the appended claims.

## Claims

1. A pressure exchanger (200) comprising:
a rotor (210) configured to rotate about an axis (201), the rotor (210) defining a plurality of rotor ducts (202) extending parallel to the axis (201), each rotor duct (202) extending between a first side surface (211) and a second side surface (212) of the rotor (210) that are spaced apart from each other in an axial direction, wherein the rotor (210) is configured to communicate a first fluid through the first side surface (211) of the rotor (210) and to communicate a second fluid through the second side surface (212) of the rotor (210); and
a plurality of flow dividers (41, 43, 45, 52, 54, 203, 204, 205) that have a substantially flat shape and that are located inside the plurality of rotor ducts (202), the flow dividers (41, 43, 45, 52, 54, 203, 204, 205) partitioning an inner space of each of the plurality of rotor ducts (202) into a plurality of equal resistance flow paths (42, 44, 46) without any structural support function that are configured to be in communication with the first fluid and the second fluid;
wherein each of the flow dividers (41, 43, 45, 52, 54, 203, 204, 205) comprises
a first axial end surface that is spaced apart from and recessed relative to the first side surface (211) of the rotor (210) in the axial direction, and
a second axial end surface that is spaced apart from and recessed relative to the second side surface (212) of the rotor (210) in the axial direction;
wherein an axial length of each of the flow dividers (41, 43, 45, 52, 54, 203, 204, 205) is less than a rotor length (L) of the rotor (210) in the axial direction;
wherein the rotor length (L) is greater than an axial length of each of the plurality of flow paths (42, 44, 46) in the axial direction; and
wherein the flow dividers (41, 43, 45, 52, 54, 203, 204, 205) define an aspect ratio of each of the plurality of flow paths (42, 44, 46), the aspect ratio being a ratio of a width of one of the plurality of flow paths (42, 44, 46) in a radial direction of the one of the plurality of flow paths (42, 44, 46) with respect to an axial length of the one of the plurality of flow paths (42, 44, 46) in the axial direction.

2. The pressure exchanger (200) of claim 1, wherein each of the plurality of flow paths (42, 44, 46) has an equal aspect ratio.

3. The pressure exchanger (200) of claim 2, wherein each of the plurality of flow paths (42, 44, 46) has an equal cross-sectional area.

4. The pressure exchanger (200) of claim 3, wherein each of the plurality of flow paths (42, 44, 46) has the same width and the same axial length.

5. The pressure exchanger (200) of claim 1, wherein the plurality of flow dividers comprise a first and second flow dividers (43, 45) that are located inside the one of the plurality of rotor ducts (202) and that define three or more flow paths (44, 46) in the one of the plurality of rotor ducts (202).

6. The pressure exchanger (200) of claim 5, wherein the first flow divider (43, 45) comprises a first plate, and the second flow divider (43, 45) comprises a second plate that intersects the first plate.

7. The pressure exchanger (200) of claim 6, wherein a radial width of each of the first plate and the second plate is less than or equal to a diameter of the one of the plurality of rotor ducts (202), and
wherein an axial length of each of the first plate and the second plate is equal to the axial length of the plurality of flow paths (44, 46) in the axial direction.

8. The pressure exchanger (200) of claim 7, wherein the plurality of flow dividers further comprise a third flow divider (43, 45) located inside the one of the plurality of rotor ducts (202), the third flow divider (43, 45) including a third plate that intersects the first flow divider (43, 45) and the second flow divider (43, 45), and
wherein a radial width of the third plate and the radial width of each of the first plate and the second plate are equal to a radius of the one of the plurality of rotor ducts (202).

9. The pressure exchanger (200) of claim 1, wherein the one of the plurality of rotor ducts (202) comprises:
a step portion (214) defined in the one of the plurality of rotor ducts (202);
a first rotor portion that extends from the first side surface (211) of the rotor (210) to the step portion (214); and
a second rotor portion that extends from the second side surface (212) of the rotor (210) to the step portion (214), and
wherein flow dividers (52, 54) of the plurality of flow dividers are located in the first rotor portion and the second rotor portion.

10. The pressure exchanger (200) of claim 9, wherein the plurality of flow dividers comprise:
a first flow divider (52) that is located in and extends along the first rotor portion, the first flow divider (52) having a first inner end that faces the step portion (214); and
a second flow divider (54) that is located in and extends along the second rotor portion, the second flow divider (54) having a second inner end that faces the first inner end and the step portion (214).

11. The pressure exchanger (200) of claim 10, wherein the aspect ratio is defined by a width (W) of the first flow divider (52) or the second flow divider (54) in the radial direction with respect to a sum of axial lengths of the first flow divider (52) and the second flow divider (54).

12. The pressure exchanger (200) of claim 11, wherein the width (W) of the first flow divider (52) is different from the width (W) of the second flow divider (54), and the axial length of the first flow divider (52) is different from the axial length of the second flow divider (54).

13. The pressure exchanger (200) of claim 1, wherein the rotor (210) is made of ceramic, and
wherein the flow dividers (41, 43, 45, 52, 54, 203, 204, 205) are made of a plastic material and in contact with the one of the plurality of rotor ducts (202).

14. The pressure exchanger (200) of claim 13, wherein the flow dividers (41, 43, 45, 52, 54, 203, 204, 205) are coupled to inner surfaces of the plurality of rotor ducts (202) by friction without an adhesive.

15. The pressure exchanger (200) of claim 13, wherein the flow dividers (41, 43, 45, 52, 54, 203, 204, 205) are coupled to inner surfaces of the plurality of rotor ducts (202) by friction and with an adhesive.

16. The pressure exchanger (200) of claim 1, further comprising:
a first end cover (220) located at the first side surface (211) of the rotor (210), the first end cover (220) defining a first pair of apertures (240, 250) configured to communicate the first fluid; and
a second end cover (230) located at the second side surface (212) of the rotor (210), the second end cover (230) defining a second pair of apertures configured to communicate the second fluid having,
wherein each of the flow dividers (41, 43, 45, 52, 54, 203, 204, 205) comprises:
a first end that faces the first end cover (220) and is spaced apart from the first end cover (220) in the axial direction, and
a second end that faces the second end cover (230) and is spaced apart from the second end cover (230) in the axial direction.

## Patentansprüche

1. Drucktauscher (200), umfassend:
einen Rotor (210), der dazu ausgelegt ist, sich um eine Achse (201) zu drehen, wobei der Rotor (210) eine Mehrzahl von Rotorkanälen (202) definiert, die sich parallel zu der Achse (201) erstrecken, wobei sich jeder Rotorkanal (202) zwischen einer ersten Seitenfläche (211) und einer zweiten Seitenfläche (212) des Rotors (210) erstreckt, die in einer axialen Richtung voneinander beabstandet sind, wobei der Rotor (210) dazu ausgelegt ist, ein erstes Fluid durch die erste Seitenfläche (211) des Rotors (210) zu leiten und ein zweites Fluid durch die zweite Seitenfläche (212) des Rotors (210) zu leiten; und
eine Mehrzahl von Strömungsteilern (41, 43, 45, 52, 54, 203, 204, 205), die eine im Wesentlichen flache Form aufweisen und sich innerhalb der Mehrzahl von Rotorkanälen (202) befinden, wobei die Strömungsteiler (41, 43, 45, 52, 54, 203, 204, 205) einen Innenraum jedes der Mehrzahl von Rotorkanälen (202) in eine Mehrzahl von Strömungspfaden (42, 44, 46) mit gleichem Widerstand ohne jegliche strukturelle Stützfunktion unterteilen, die dazu ausgelegt sind, mit dem ersten Fluid und dem zweiten Fluid in Verbindung zu stehen;
wobei jeder der Strömungsteiler (41, 43, 45, 52, 54, 203, 204, 205) Folgendes umfasst:
eine erste axiale Endfläche, die von der ersten Seitenfläche (211) des Rotors (210) in axialer Richtung beabstandet und gegenüber dieser zurückversetzt ist, und
eine zweite axiale Endfläche, die von der zweiten Seitenfläche (212) des Rotors (210) in axialer Richtung beabstandet und gegenüber dieser zurückversetzt ist;
wobei eine axiale Länge jedes der Strömungsteiler (41, 43, 45, 52, 54, 203, 204, 205) kleiner als eine Rotorlänge (L) des Rotors (210) in axialer Richtung ist;
wobei die Rotorlänge (L) größer als eine axiale Länge jedes der Mehrzahl von Strömungspfaden (42, 44, 46) in axialer Richtung ist; und
wobei die Strömungsteiler (41, 43, 45, 52, 54, 203, 204, 205) ein Seitenverhältnis jedes der Mehrzahl von Strömungspfaden (42, 44, 46) definieren, wobei das Seitenverhältnis ein Verhältnis einer Breite eines der Mehrzahl von Strömungspfaden (42, 44, 46) in radialer Richtung des einen der Mehrzahl von Strömungspfaden (42, 44, 46) zu einer axialen Länge des einen der Mehrzahl von Strömungspfaden (42, 44, 46) in axialer Richtung ist.

2. Drucktauscher (200) nach Anspruch 1, wobei jeder der Mehrzahl von Strömungspfaden (42, 44, 46) ein gleiches Seitenverhältnis aufweist.

3. Drucktauscher (200) nach Anspruch 2, wobei jeder der Mehrzahl von Strömungspfaden (42, 44, 46) eine gleiche Querschnittsfläche aufweist.

4. Drucktauscher (200) nach Anspruch 3, wobei jeder der Mehrzahl von Strömungspfaden (42, 44, 46) die gleiche Breite und die gleiche axiale Länge aufweist.

5. Drucktauscher (200) nach Anspruch 1, wobei die Mehrzahl von Strömungsteilern einen ersten und einen zweiten Strömungsteiler (43, 45) umfasst, die sich innerhalb des einen der Mehrzahl von Rotorkanälen (202) befinden und drei oder mehr Strömungspfade (44, 46) in dem einen der Mehrzahl von Rotorkanälen (202) definieren.

6. Drucktauscher (200) nach Anspruch 5, wobei der erste Strömungsteiler (43, 45) eine erste Platte umfasst und der zweite Strömungsteiler (43, 45) eine zweite Platte umfasst, die die erste Platte schneidet.

7. Drucktauscher (200) nach Anspruch 6, wobei eine radiale Breite sowohl der ersten Platte als auch der zweiten Platte kleiner oder gleich einem Durchmesser des einen der Mehrzahl von Rotorkanälen (202) ist, und
wobei eine axiale Länge sowohl der ersten Platte als auch der zweiten Platte gleich der axialen Länge der Mehrzahl von Strömungspfaden (44, 46) in axialer Richtung ist.

8. Drucktauscher (200) nach Anspruch 7, wobei die Mehrzahl von Strömungsteilern ferner einen dritten Strömungsteiler (43, 45) umfasst, der sich innerhalb des einen der Mehrzahl von Rotorkanälen (202) befindet, wobei der dritte Strömungsteiler (43, 45) eine dritte Platte beinhaltet, die den ersten Strömungsteiler (43, 45) und den zweiten Strömungsteiler (43, 45) schneidet, und
wobei eine radiale Breite der dritten Platte und die radiale Breite sowohl der ersten Platte als auch der zweiten Platte gleich einem Radius des einen der Mehrzahl von Rotorkanälen (202) sind.

9. Drucktauscher (200) nach Anspruch 1, wobei der eine der Mehrzahl von Rotorkanälen (202) Folgendes umfasst:
einen Stufenabschnitt (214), der in dem einen der Mehrzahl von Rotorkanälen (202) definiert ist;
einen ersten Rotorabschnitt, der sich von der ersten Seitenfläche (211) des Rotors (210) zu dem Stufenabschnitt (214) erstreckt; und
einen zweiten Rotorabschnitt, der sich von der zweiten Seitenfläche (212) des Rotors (210) zu dem Stufenabschnitt (214) erstreckt, und
wobei sich Strömungsteiler (52, 54) der Mehrzahl von Strömungsteilern in dem ersten Rotorabschnitt und dem zweiten Rotorabschnitt befinden.

10. Drucktauscher (200) nach Anspruch 9, wobei die Mehrzahl von Strömungsteilern Folgendes umfasst:
einen ersten Strömungsteiler (52), der sich in dem ersten Rotorabschnitt befindet und sich entlang diesem erstreckt, wobei der erste Strömungsteiler (52) ein erstes inneres Ende aufweist, das dem Stufenabschnitt (214) zugewandt ist; und
einen zweiten Strömungsteiler (54), der sich in dem zweiten Rotorabschnitt befindet und sich entlang diesem erstreckt, wobei der zweite Strömungsteiler (54) ein zweites inneres Ende aufweist, das dem ersten inneren Ende und dem Stufenabschnitt (214) zugewandt ist.

11. Drucktauscher (200) nach Anspruch 10, wobei das Seitenverhältnis durch eine Breite (W) des ersten Strömungsteilers (52) oder des zweiten Strömungsteilers (54) in radialer Richtung in Bezug auf eine Summe von axialen Längen des ersten Strömungsteilers (52) und des zweiten Strömungsteilers (54) definiert ist.

12. Drucktauscher (200) nach Anspruch 11, wobei sich die Breite (W) des ersten Strömungsteilers (52) von der Breite (W) des zweiten Strömungsteilers (54) unterscheidet und sich die axiale Länge des ersten Strömungsteilers (52) von der axialen Länge des zweiten Strömungsteilers (54) unterscheidet.

13. Drucktauscher (200) nach Anspruch 1, wobei der Rotor (210) aus Keramik hergestellt ist, und
wobei die Strömungsteiler (41, 43, 45, 52, 54, 203, 204, 205) aus einem Kunststoffmaterial hergestellt sind und mit dem einen der Mehrzahl von Rotorkanälen (202) in Kontakt stehen.

14. Drucktauscher (200) nach Anspruch 13, wobei die Strömungsteiler (41, 43, 45, 52, 54, 203, 204, 205) mit Innenflächen der Mehrzahl von Rotorkanälen (202) durch Reibung ohne Klebstoff gekoppelt sind.

15. Drucktauscher (200) nach Anspruch 13, wobei die Strömungsteiler (41, 43, 45, 52, 54, 203, 204, 205) mit Innenflächen der Mehrzahl von Rotorkanälen (202) durch Reibung und mit einem Klebstoff gekoppelt sind.

16. Drucktauscher (200) nach Anspruch 1, ferner umfassend:
eine erste Endabdeckung (220), die sich an der ersten Seitenfläche (211) des Rotors (210) befindet, wobei die erste Endabdeckung (220) ein erstes Paar von Öffnungen (240, 250) definiert, die dazu ausgelegt sind, das erste Fluid zu leiten; und
eine zweite Endabdeckung (230), die sich an der zweiten Seitenfläche (212) des Rotors (210) befindet, wobei die zweite Endabdeckung (230) ein zweites Paar von Öffnungen definiert, die dazu ausgelegt sind, das zweite Fluid zu leiten,
wobei jeder der Strömungsteiler (41, 43, 45, 52, 54, 203, 204, 205) Folgendes umfasst:
ein erstes Ende, das der ersten Endabdeckung (220) zugewandt ist und von der ersten Endabdeckung (220) in axialer Richtung beabstandet ist, und
ein zweites Ende, das der zweiten Endabdeckung (230) zugewandt ist und von der zweiten Endabdeckung (230) in axialer Richtung beabstandet ist.

## Revendications

1. Échangeur de pression (200), comprenant :
un rotor (210) configuré pour entrer en rotation autour d'un axe (201), le rotor (210) définissant une pluralité de conduites de rotor (202) s'étendant parallèlement à l'axe (201), chaque conduite de rotor (202) s'étendant entre une première surface latérale (211) et une seconde surface latérale (212) du rotor (210) qui sont espacées l'une de l'autre dans une direction axiale, dans lequel le rotor (210) est configuré pour entraîner la communication d'un premier fluide à travers la première surface latérale (211) du rotor (210) et pour entraîner la communication d'un second fluide à travers la seconde surface latérale (212) du rotor (210) ; et
une pluralité de diviseurs d'écoulement (41, 43, 45, 52, 54, 203, 204, 205) qui ont une forme sensiblement plate et qui sont situés à l'intérieur de la pluralité de conduites de rotor (202), les diviseurs d'écoulement (41, 43, 45, 52, 54, 203, 204, 205) partitionnant un espace interne de chacune de la pluralité de conduites de rotor (202) en une pluralité de chemins d'écoulement de résistance égale (42, 44, 46), sans aucune fonction de support structurale, qui sont configurés pour être en communication avec le premier fluide et le second fluide ;
dans lequel chacun des diviseurs d'écoulement (41, 43, 45, 52, 54, 203, 204, 205) comprend
une première surface d'extrémité axiale qui est espacée de la première surface latérale (211) du rotor (210), et en retrait relativement à celle-ci, dans la direction axiale, et
une seconde surface d'extrémité axiale qui est espacée de la seconde surface latérale (212) du rotor (210), et en retrait relativement à celle-ci, dans la direction axiale ;
dans lequel une longueur axiale de chacun des diviseurs d'écoulement (41, 43, 45, 52, 54, 203, 204, 205) est inférieure à une longueur de rotor (L) du rotor (210) dans la direction axiale ;
dans lequel la longueur de rotor (L) est supérieure à une longueur axiale de chacun de la pluralité de chemins d'écoulement (42, 44, 46) dans la direction axiale ; et
dans lequel les diviseurs d'écoulement (41, 43, 45, 52, 54, 203, 204, 205) définissent un rapport d'aspect de chacun de la pluralité de chemins d'écoulement (42, 44, 46), le rapport d'aspect étant un rapport d'une largeur d'un de la pluralité de chemins d'écoulement (42, 44, 46) dans une direction radiale de l'un de la pluralité de chemins d'écoulement (42, 44, 46) par rapport à une longueur axiale de l'un de la pluralité de chemins d'écoulement (42, 44, 46) dans la direction axiale.

2. Échangeur de pression (200) de la revendication 1, dans lequel chacun de la pluralité de chemins d'écoulement (42, 44, 46) a un rapport d'aspect égal.

3. Échangeur de pression (200) de la revendication 2, dans lequel chacun de la pluralité de chemins d'écoulement (42, 44, 46) a une superficie de section transversale égale.

4. Échangeur de pression (200) de la revendication 3, dans lequel chacun de la pluralité de chemins d'écoulement (42, 44, 46) a la même largeur et la même longueur axiale.

5. Échangeur de pression (200) de la revendication 1, dans lequel la pluralité de diviseurs d'écoulement comprennent des premier et deuxième diviseurs d'écoulement (43, 45) qui sont situés à l'intérieur de l'une de la pluralité de conduites de rotor (202) et qui défissent trois ou plus de trois chemins d'écoulement (44, 46) dans l'une de la pluralité de conduites de rotor (202).

6. Échangeur de pression (200) de la revendication 5, dans lequel le premier diviseur d'écoulement (43, 45) comprend une première plaque, et le deuxième diviseur d'écoulement (43, 45) comprend une deuxième plaque qui croise la première plaque.

7. Échangeur de pression (200) de la revendication 6, dans lequel une largeur radiale de chacune de la première plaque et de la deuxième plaque est inférieure ou égale à un diamètre de l'une de la pluralité de conduites de rotor (202), et
dans lequel une longueur axiale de chacune de la première plaque et de la deuxième plaque est égale à la longueur axiale de la pluralité de chemins d'écoulement (44, 46) dans la direction axiale.

8. Échangeur de pression (200) de la revendication 7, dans lequel la pluralité de diviseurs d'écoulement comprennent en outre un troisième diviseur d'écoulement (43, 45) situé à l'intérieur de l'une de la pluralité de conduites de rotor (202), le troisième diviseur d'écoulement (43, 45) incluant une troisième plaque qui croise le premier diviseur d'écoulement (43, 45) et le deuxième diviseur d'écoulement (43, 45), et
dans lequel une largeur radiale de la troisième plaque et la largeur radiale de chacune de la première plaque et de la deuxième plaque sont égales à un rayon de l'un de la pluralité de conduites de rotor (202).

9. Échangeur de pression (200) de la revendication 1, dans lequel l'une de la pluralité de conduites de rotor (202) comprend :
une partie à gradin (214) définie dans l'une de la pluralité de conduites de rotor (202) ;
une première partie de rotor qui s'étend depuis la première surface latérale (211) du rotor (210) jusqu'à la partie à gradin (214) ; et
une seconde partie de rotor qui s'étend depuis la seconde surface latérale (212) du rotor (210) jusqu'à la partie à gradin (214), et
dans lequel des diviseurs d'écoulement (52, 54) de la pluralité de diviseurs d'écoulement sont situés dans la première partie de rotor et la seconde partie de rotor.

10. Échangeur de pression (200) de la revendication 9, dans lequel la pluralité de diviseurs d'écoulement comprennent :
un premier diviseur d'écoulement (52) qui est situé dans la première partie de rotor, et s'étend le long de celle-ci, le premier diviseur d'écoulement (52) ayant une première extrémité interne qui fait face à la partie à gradin (214) ; et
un deuxième diviseur d'écoulement (54) qui est situé dans la seconde partie de rotor, et s'étend le long de celle-ci, le deuxième diviseur d'écoulement (54) ayant une seconde extrémité interne qui fait face à la première extrémité interne et à la partie à gradin (214).

11. Échangeur de pression (200) de la revendication 10, dans lequel le rapport d'aspect est défini par une largeur (W) du premier diviseur d'écoulement (52) ou du deuxième diviseur d'écoulement (54) dans la direction radiale par rapport à une somme de longueurs axiales du premier diviseur d'écoulement (52) et du deuxième diviseur d'écoulement (54).

12. Échangeur de pression (200) de la revendication 11, dans lequel la largeur (W) du premier diviseur d'écoulement (52) est différente de la largeur (W) du deuxième diviseur d'écoulement (54), et la longueur axiale du premier diviseur d'écoulement (52) est différente de la longueur axiale du deuxième diviseur d'écoulement (54).

13. Échangeur de pression (200) de la revendication 1, dans lequel le rotor (210) est fait de céramique, et
dans lequel les diviseurs d'écoulement (41, 43, 45, 52, 54, 203, 204, 205) sont faits d'un matériau en plastique et en contact avec l'une de la pluralité de conduites de rotor (202).

14. Échangeur de pression (200) de la revendication 13, dans lequel les diviseurs d'écoulement (41, 43, 45, 52, 54, 203, 204, 205) sont couplés à des surfaces internes de la pluralité de conduites de rotor (202) par frottement sans un adhésif.

15. Échangeur de pression (200) de la revendication 13, dans lequel les diviseurs d'écoulement (41, 43, 45, 52, 54, 203, 204, 205) sont couplés à des surfaces internes de la pluralité de conduites de rotor (202) par frottement et avec un adhésif.

16. Échangeur de pression (200) de la revendication 1, comprenant en outre :
un premier couvercle d'extrémité (220) situé sur la première surface latérale (211) du rotor (210), le premier couvercle d'extrémité (220) définissant une première paire d'ouvertures (240, 250) configurées pour entraîner la communication du premier fluide ; et
un second couvercle d'extrémité (230) situé sur la seconde surface latérale (212) du rotor (210), le second couvercle d'extrémité (230) définissant une seconde paire d'ouvertures configurées pour entraîner la communication du second fluide ayant,
dans lequel chacun des diviseurs d'écoulement (41, 43, 45, 52, 54, 203, 204, 205) comprend :
une première extrémité qui fait face au premier couvercle d'extrémité (220) et est espacée du premier couvercle d'extrémité (220) dans la direction axiale, et une seconde extrémité qui fait face au second couvercle d'extrémité (230) et est espacée du second couvercle d'extrémité (230) dans la direction axiale.
